# EUROPEAN PATENT APPLICATION

(11) **EP 2 592 816 A1**
(43) Date of publication of application: **15.05.2013**
(21) Application number: 12179297.2
(22) Date of filing: 03.08.2012
(51) Int. Cl.: H04M 1/60, H03G 5/16, H04R 3/04

(54) **Short range wireless communication apparatus and method for improving phone sound quality**

(30) Priority: 14.11.2011 KR 20110118541
(71) Applicant: LG Innotek Co., Ltd., Seoul 100-714 (KR)
(72) Inventor: Choi, Byung Hyun, Seoul 100-714 (KR)
(74) Representative: Dreiss

(57) **Abstract**

Disclosed are a short range wireless communication apparatus and a method for improving phone sound quality. The short range wireless communication apparatus a microphone to receive a phone voice to output an audio signal, an equalizer to compensate the audio signal output from the microphone for signal distortion according to a frequency response characteristic of a terminal, and a wireless communication unit to transmit the compensated audio signal to the terminal.

## Description

### BACKGROUND

The disclosure relates to a short range wireless communication apparatus and a method for improving phone sound quality. In more particular, the disclosure relates to a technology for improving phone sound quality.

A Bluetooth function, which is one of technologies to carry out short range wireless communication, makes communication between terminals, and a terminal and a Bluetooth appliance existing within a short range by using an industrial scientific medical (ISM) band of 2.4GHz. For example, a portable terminal can provide various services such as wireless headset, printing, and file transfer based on the Bluetooth technology.

In the case of a terminal such as a cellular phone having a phone call function, the Bluetooth technology is the most extensively utilized in order to implement a hands-free appliance. A user voice, which is input to a short range wireless communication apparatus, is transmitted to a terminal connected to the short range wireless communication apparatus through Bluetooth communication, and transmitted to the counterpart terminal over a mobile communication network (2G/3G/4G) so that a call is made.

However, in the case of the short range wireless communication apparatus and the terminal communicating therewith, sound output from a speaker may be input to a microphone of the short range wireless communication apparatus, and thus echoed to the counterpart, so that call quality may be degraded. In addition, since voice is not smoothly transferred to the two parties due to surrounding noise, the noise must be removed.

In addition, since terminals mostly have mutually-opposite characteristics therebetween, the optimization is difficult in the call quality.

### SUMMARY

The disclosure provides a short range wireless communication apparatus capable of improving phone sound quality and a method for improving the phone sound quality.

According to the embodiment of the disclosure, there is provided a short range wireless communication apparatus including a microphone to receive a phone voice to output an audio signal, an equalizer to compensate the audio signal output from the microphone for signal distortion according to a frequency response characteristic of a terminal, and a wireless communication unit to transmit the compensated audio signal to the terminal.

According to another embodiment of the disclosure, there is provided a method for improving phone sound quality of a short range communication apparatus. The method includes the steps of connecting with a terminal, determining if identification information of the terminal is stored in a storage unit, searching for equalization information matched with the identification information of the terminal in the storage unit if the identification information of the terminal is stored in the storage unit according to a determination result, and compensating for signal distortion based on the searched equalization information. The storage unit stores identification information of at least one terminal and equalization information, which is used to compensate for signal distortion based on a frequency response characteristic of the at least one terminal, by matching the identification information of the at least one terminal with the equalization information.

Meanwhile, the method for improving phone sound quality can be prepared as a program executable in a computer and can be realized in a computer-readable non-transitory recording medium.

### BRIEF DESCRIPTION OF THE DRAWINGS

FIG. 1 is a block diagram showing the communication based on a short range wireless communication apparatus;

FIG. 2 is a graph showing an audio output of the short range wireless communication apparatus;

FIGS. 3(a) to 3(b) are graphs showing audio outputs received in a counterpart terminal;

FIG. 4 is a block diagram showing a short range wireless communication apparatus according to one embodiment of the disclosure;

FIGS. 5 to 9 are graphs showing equalization examples according to one embodiment of the disclosure;

FIG. 10 is a view schematically showing improved phone sound quality of the short range wireless communication apparatus according to one embodiment of the disclosure when an equalizer is used in the short range wireless communication apparatus; and

FIG. 11 is a flowchart showing a method for improving phone sound quality according to one embodiment of the disclosure.

### DETAILED DESCRIPTION OF THE EMBODIMENTS

Hereinafter, exemplary embodiments of the disclosure will be described in detail so that those skilled in the art to which the invention pertains can easily realize the disclosure.

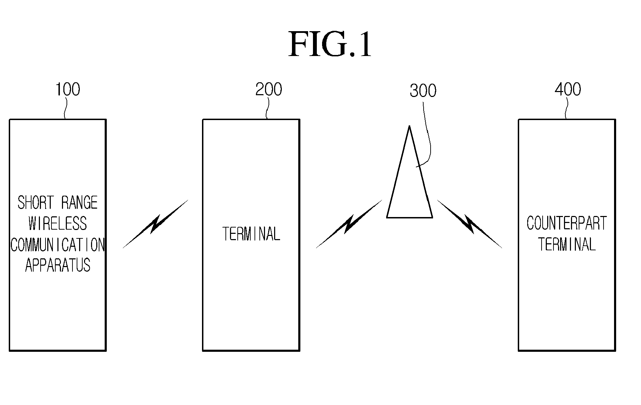

FIG. 1 is a block diagram showing the communication based on a short range wireless communication apparatus 100.

The short range wireless communication apparatus 100 can transfer a voice to a counterpart terminal 400 through a base station (or repeater station) without directly transferring the voice to a terminal 200 through the connection with the terminal 200. In other words, a voice can be transferred to the counterpart terminal 400 by transferring the voice to the short range wireless communication apparatus 100.

According to one embodiment, on the assumption that the short range wireless communication apparatus 100 is a hands-free appliance used in vehicle driving, the terminal 200 is a cellular phone of a user, and the counterpart terminal 400 is a cellular phone of the counterpart, the user can make conversation with the counterpart by wearing the hands-free appliance on the ears of the user without directly holding the cellular phone by using the hands of the user. In other words, the user can easily make conversation with the counterpart without the interrupt even during the driving of the vehicle.

Although the short range wireless communication apparatus 100 may include one of communication standards such as Zig-Bee and WiFi direct, the short range wireless communication apparatus 100 preferably includes Bluetooth.

The Bluetooth refers to a communication standard capable of transceiving data by using a bandwidth of 2.4GHz within a short range of about 10m to about 100m. The communication standard includes a predetermined protocol to deal with the crosstalk occurring when the same frequency is used or identify devices.

The terminal 200 and the counterpart terminal 400 may make communication with each other through a 2G, 3G, or 4G mobile communication network.

Although the terminal 200 and the counterpart terminal 400 may include a typical mobile phone such as a cellular phone, a personal communication service (PCS) phone, a GSM phone, a CDMA-2000 phone, or a WCDMA phone, a portable multimedia player (PMP), a personal digital assistant (PDA), a smart phone, or a mobile broadcast system (MBS) phone, the disclosure is not limited thereto.

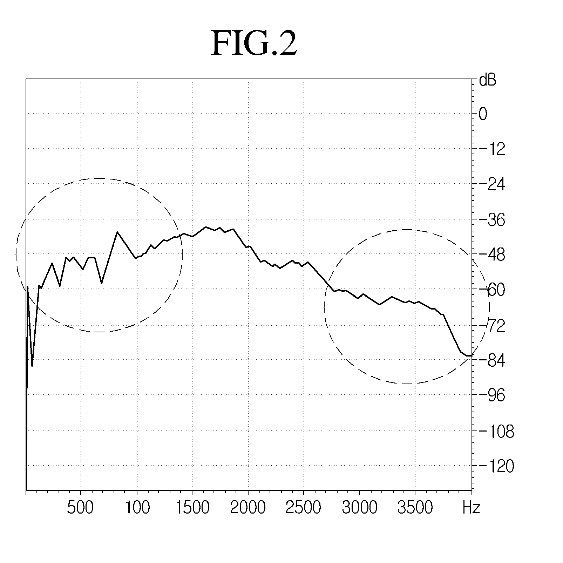

FIG. 2 is a graph showing an audio output of the short range wireless communication apparatus.

FIG. 2 is a graph showing the output of an audio signal transferred from an echo and noise attenuator 105 to a wireless communication unit 106 in the short range wireless communication apparatus 100 which will be described later.

A horizontal axis (x axis) represents a frequency (unit: Hz), and a vertical axis (y axis) represents the intensity of the audio signal (unit: dB).

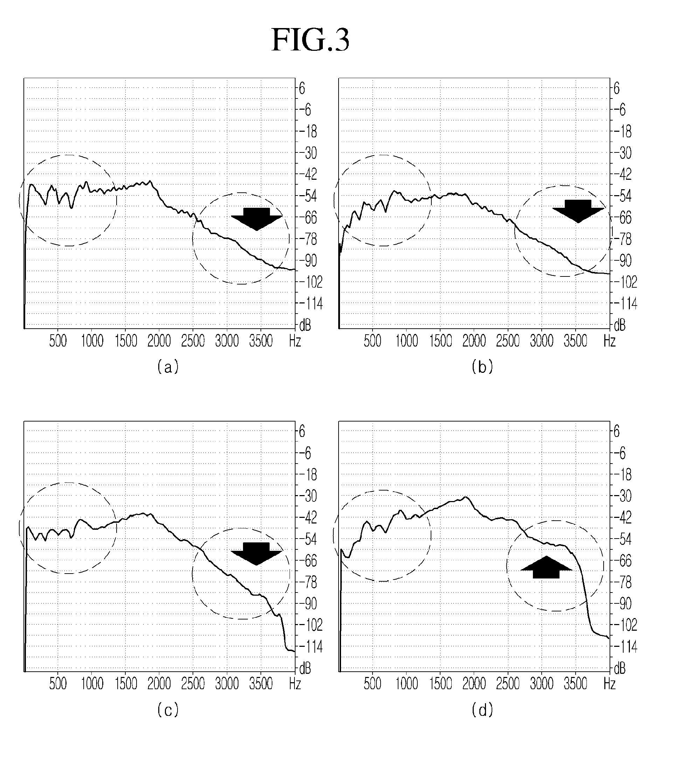

Hereinafter, an observation is performed while focusing on audio signals at a low frequency band of 0Hz to 1000Hz and a high frequency band of 3000Hz to 4000Hz in order to check the output form of an audio signal received in the counterpart terminal 400 when the audio signal, which is transferred from the echo and noise attenuator 105 to be described later to the wireless communication unit 106 to be described later, is transmitted to the counterpart terminal 400 through the terminal 200. In other words, hereinafter, the changed characteristic of an audio signal output from the short range wireless communication apparatus 100 and transmitted to the counterpart terminal 400 through the terminal 200 will be described with reference to FIG. 3.

FIGS. 3(a) to 3(d) are graphs showing an audio output received in the counterpart terminal 400.

In addition, factors exerting an influence on the phone sound quality of the counterpart terminal 400 will be examined by comparing the graph shown in FIG. 2 and the graph shown in FIG. 3. In the present experiment, a cellar phone A, B, and C are selectively used as the terminal 200 and the counter terminal 400.

FIG. 3(a) is a graph showing the output of an audio signal received in the cellar phone B when the terminal 200 is the cellular phone A, and the counterpart terminal 400 is the cellular phone B.

FIG. 3(b) is a graph showing the output of an audio signal received in the cellar phone B when the terminal 200 is the cellular phone C, and the counterpart terminal 400 is the cellular phone B.

FIG. 3(c) is a graph showing the output of an audio signal received in the cellar phone C when the terminal 200 is the cellular phone A, and the counterpart terminal 400 is the cellular phone C.

FIG. 3(d) is a graph showing the output of an audio signal received in the cellar phone C when the terminal 200 is the cellular phone B, and the counterpart terminal 400 is the cellular phone C.

Referring to FIGS. 3(a) and 3(c), the same phone, that is, the cellular phone A is used as the terminal 200, and the cellar phones B and C are used as the counterpart terminal 400 in two cases of FIGS. 3(a) and 3(c). The two cases of FIGS. 3(a) and 3(c) represent the outputs of the audio signals significantly similar to each other at the low frequency band of 0Hz to 1000Hz, and the high frequency band of 3000Hz to 4000Hz except for the slight difference between the outputs of the audio signals at the high frequency band of 3000Hz to 4000Hz.

Referring to FIGS. 3(a) and 3(b), the cellular phones A and C are used as the terminal 200, and the cellular phone B is used as the counterpart terminal 400 in two cases of FIGS. 3(a) and 3(b). The output of the audio signal at the low frequency band of 0Hz to 1000Hz is amplified when the terminal 200 is the cellular phone A as compared with when the terminal 200 is the cellular phone C. The two cases represent outputs of the audio signals significantly similar to each other at the high frequency band of 3000Hz to 4000Hz. In other words, the counterpart terminal 400 receives the output of the audio signal varied according to the types of the terminal 200.

Referring to FIGS. 3(c) and 3(d), the cellular phones A and B are used as the terminal 200, and the cellular phone C is used as the counterpart terminal 400 in two cases of FIGS. 3(c) and 3(d). The output of the audio signal at the low frequency band of 0Hz to 1000Hz is amplified when the terminal 200 is the cellular phone C as compared with when the terminal 200 is the cellular phone A. In addition, even the output of the audio signal at the high frequency band of 3000Hz to 4000Hz is amplified when the terminal 200 is the cellular phone C as compared with when the terminal 200 is the cellular phone A. In other words, the counterpart terminal 400 receives the output of the audio signal varied according to the types of the terminal 200.

Therefore, the output (call quality) of the audio signal received in the counterpart terminal 400 is more greatly affected according to the types of the terminal 200, which makes communication with the short range wireless communication apparatus 100, of the terminal 200 and the counterpart terminal 400.

As recognized based on the above features, the characteristic of the terminal 200 making communication with the short range wireless communication apparatus 100 is a main factor to determine the phone sound quality. Since the terminal 200 may have various frequency characteristics, a unit corresponding to the terminal 200 having the various frequency characteristics is required.

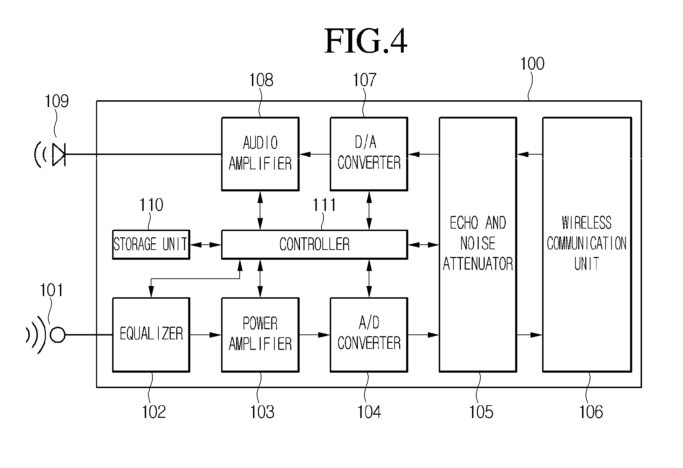

FIG. 4 is a block diagram showing the short range wireless communication apparatus 100 according to one embodiment of the disclosure.

The short range wireless communication apparatus 100 includes a microphone 101, an equalizer 102, a power amplifier 103, an A/D converter 104, the echo and noise attenuator 105, the wireless communication unit 106, a D/A converter 107, an audio amplifier 108, a speaker 109, a storage unit 110, and a controller 111.

The microphone 101 may receive an external voice signal. In detail, the microphone 101 receives a phone voice to output an audio signal.

The external voice signal may include a signal such as a voice of a user using the short range wireless communication apparatus 100, external noise, or echo occurring when the user talks with the counterpart.

The equalizer 102 compensates an audio signal output from the microphone 101 for signal distortion according to the frequency response characteristic of a terminal. The equalizer 102 may make an audio signal distorted based on the previously-known frequency response characteristic of the terminal 200 and transfer the audio signal to the terminal 200.

The equalizer 102 may perform a filtering operation suitable for the frequency response characteristic of the terminal 200 under the control of the controller 111 which will be described later.

According to one embodiment, the equalizer 102 may generally include a high pass filter (HPF), a low pass filter (LPF), a band pass filter (BPF), a band reject filter (BRF), and an all pass filter (APF), and may have a filter structure equipped with a switch by using a CMOS transistor or a diode, but the disclosure is not limited thereto.

The power amplifier 103 may amplify the audio signal, which is compensated by the equalizer 102, to a preset intensity.

The A/D converter 104 may convert the amplified analogue audio signal into a digital signal.

The echo and noise attenuator 105 may attenuate echo and noise signals from the digital signal. The echo and noise attenuator 105 may contribute to the improvement of the phone sound quality by attenuating the noise signal including a voice signal of the counterpart and external noise from the audio signal input through the microphone 101.

The echo and noise attenuator 105 performs the above process with respect to even the voice signal of the user received to the terminal 200 from the counterpart terminal 400.

The wireless communication unit 106 processes the audio signal, which has the attenuated echo and noise signals, in the form of a signal for the communication with the terminal 200, and transmits the signal in the form of an RF to the terminal 200.

The wireless communication unit 106 may receive an audio signal from the terminal 200. The wireless communication unit 106 transceives signals with the terminal 200 through a short range wireless communication standard, preferably, a Bluetooth communication standard.

The D/A converter 107 may convert the digital signal having attenuated echo and noise signals into an analog signal.

The audio amplifier 180 amplifies the analog signal to the intensity of a signal recognizable by a user.

The speaker 109 may output the amplified audio signal in the form of a voice.

The storage unit 110 may store programs required for the operations of the short range wireless communication apparatus 100. In particular, the storage unit 110 may store the identification information of at least one terminal and equalization information used to compensate for signal distortion by matching the identification information of the terminal with the equalization information. According to one embodiment, the equalization information may include information of a frequency response characteristic which is an output characteristic according to the frequency variation of the terminal 200. According to one embodiment, the equalization information may include the information of a compensation response characteristic used to compensate to the output characteristic according to the frequency variation of the terminal 200.

The storage unit 110 may include storage media including at least one of a flash memory type memory, a hard disk type memory, a multimedia card micro-type memory, a card type memory (e.g., an SD memory or an XD memory), a RAM, and a ROM (including EEPROM).

The controller 111 controls the whole operations of the short range wireless communication apparatus 100.

In particular, if the short range wireless communication apparatus 100 is in a communication-possible state with the terminal 200, the controller 111 searches for the identification information of the terminal 100 connected to the short range wireless communication apparatus 100 and the equalization information matched with the identification information of the terminal 200 in the storage unit 110, and controls the equalizer 102 so that the equalizer 102 can compensate the audio signal according to the equalization information.

According to one embodiment, if the controller 111 determines that the frequency response characteristic of the terminal 200 attenuates the intensity of a signal having a high frequency band, the controller 111 applies a control signal to the equalizer 102 so that the high pass filter is used, thereby amplifying and outputting only the signal having the high frequency band.

According to one embodiment, if the controller 111 determines that the frequency response characteristic of the terminal 200 attenuates the intensity of a signal having a low frequency band, the controller 111 applies a control signal to the equalizer 102 so that the low pass filter is used, thereby amplifying and outputting only the signal having the low frequency band.

According to one embodiment, if the controller 111 determines that the frequency response characteristic of the terminal 200 attenuates the intensity of a signal having an intermediate frequency band, the controller 111 applies a control signal to the equalizer 102 so that the band pass filter is used, thereby amplifying and outputting only the signal having the intermediate frequency band.

According to one embodiment, if the controller 111 determines that the frequency response characteristic of the terminal 200 amplifies the intensity of a signal having an intermediate frequency band, the controller 111 applies a control signal to the equalizer 102 so that the band reject filter is used, thereby attenuating and outputting only the signal having the intermediate frequency band.

According to one embodiment, if the controller 111 determines that the frequency response characteristic of the terminal 200 attenuates the intensity of a signal having a whole frequency band, the controller 111 applies a control signal to the equalizer 102 so that the all pass filter is used, thereby attenuating and outputting the signal having the whole frequency band.

Therefore, an audio signal having a sound quality characteristic similar to that of a voice signal of the user is transferred to the counterpart terminal 400 used by the counterpart, so that the call quality can be maintained at a constant level.

If the identification information of the terminal 200 connected to the short range wireless communication apparatus 100 is not stored in the storage unit 110, the controller 111 detects the identification information of the terminal 200 connected to the short range wireless communication apparatus 100 and the equalization information matched with the identification information of the terminal 200, and performs a control operation to store the identification information of the terminal 200 and the equalization information matched with the identification information in the storage unit 110. Through the above procedure, the short range wireless communication apparatus 100 can provide a phone voice having a constant level by utilizing the stored information even if the identification information of the terminal 200 connected to the short range wireless communication apparatus 100 and the equalization information are not stored in the storage unit 110.

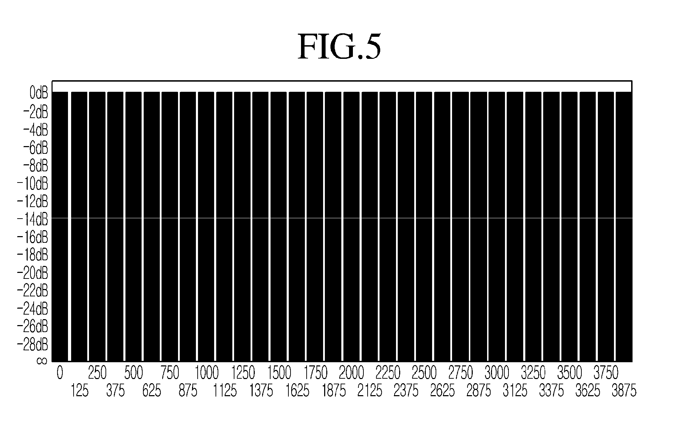

FIGS. 5 to 9 are graphs showing equalization examples according to one embodiment of the disclosure.

In the graphs shown in FIGS. 5 to 9, an x axis represents a frequency (Hz), and a y axis represents a signal level (dB).

FIG. 5 is a graph showing an example in which the equalizer 102 includes the all pass filter. If the controller 111 determines that the frequency response characteristic of the terminal 200 attenuates the intensity of a signal having a whole frequency band, the controller 111 applies a control signal to the equalizer 102 so that the all pass filter is used, thereby attenuating and outputting the signal having the whole frequency band.

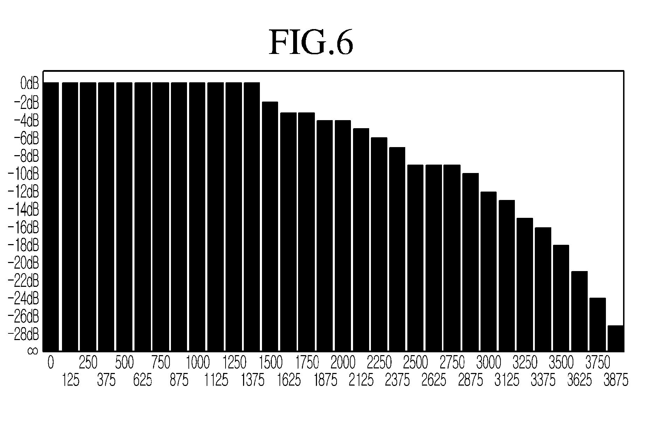

FIG. 6 is a graph showing an example in which the equalizer 102 includes the low pass filter. If the controller 111 determines that the frequency response characteristic of the terminal 200 attenuates the intensity of a signal having a low frequency band, the controller 111 applies a control signal to the equalizer 102 so that the low pass filter is used, thereby amplifying and outputting only the signal having the low frequency band.

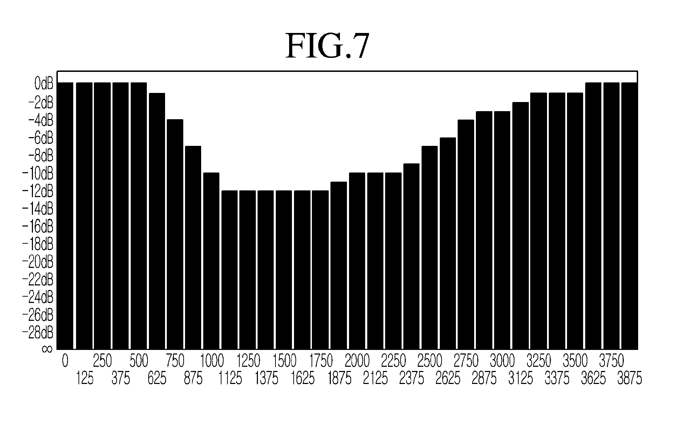

FIG. 7 is a graph showing an example in which the equalizer 102 includes the band reject filter. If the controller 111 determines that the frequency response characteristic of the terminal 200 amplifies the intensity of a signal having an intermediate frequency band, the controller 111 applies a control signal to the equalizer 102 so that the band reject filter is used, thereby attenuating and outputting only the signal having the intermediate frequency band.

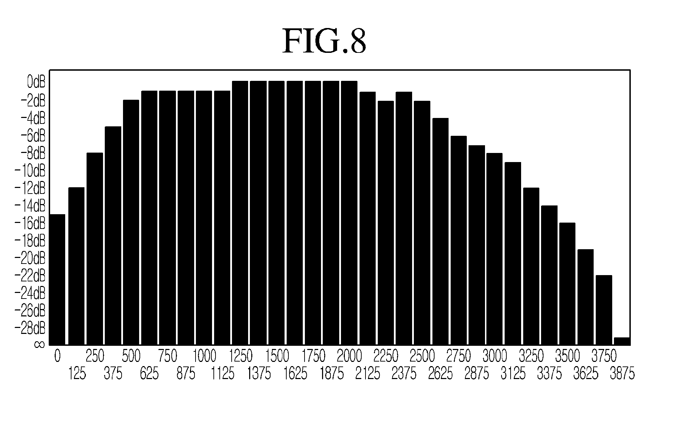

FIG. 8 is a graph showing an example in which the equalizer 102 includes the band pass filter. If the controller 111 determines that the frequency response characteristic of the terminal 200 attenuates the intensity of a signal having an intermediate frequency band, the controller 111 applies a control signal to the equalizer 102 so that the band pass filter is used, thereby amplifying and outputting only the signal having the intermediate frequency band.

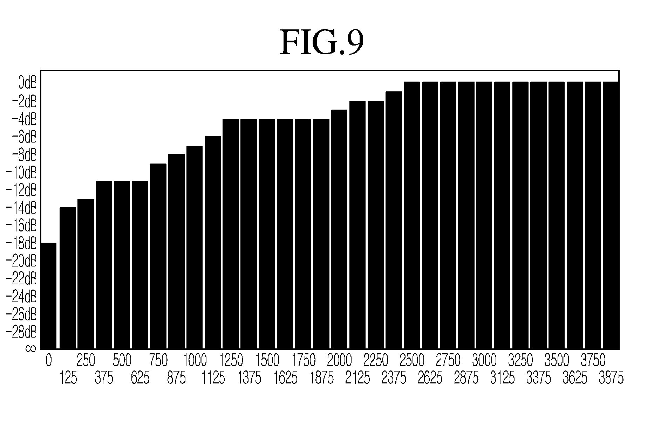

FIG. 9 is a graph showing an example in which the equalizer 102 includes the high pass filter. If the controller 111 determines that the frequency response characteristic of the terminal 200 attenuates the intensity of a signal having a high frequency band, the controller 111 applies a control signal to the equalizer 102 so that the high pass filter is used, thereby amplifying and outputting only the signal having the high frequency band.

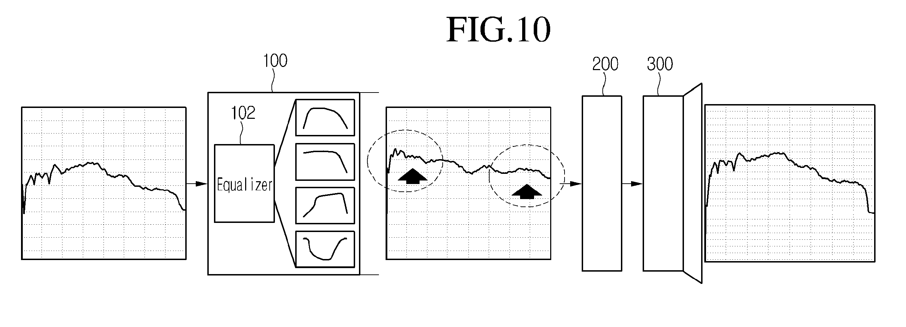

FIG. 10 is a view schematically showing improved phone sound quality of the short range wireless communication apparatus 100 according to one embodiment of the disclosure when the equalizer 102 is used in the short range wireless communication apparatus 100.

An external audio signal is input to the short range wireless communication apparatus 100. The controller 111 applies a control signal to the equalizer 102 according to the previously-known frequency response characteristic of the terminal 200. The control signal may refer to a signal to determine a filter to be operated. The equalizer 102 may generally include the high pass filter (HPF), the low pass filter (LPF), the band pass filter (BPF), the band reject filter (BRF), and the all pass filter (APF), and may have a filter structure equipped with a switch by using a CMOS transistor or a diode.

Referring to FIG. 10, since the terminal 200 has a frequency response characteristic to attenuate the audio signal intensity at a low frequency band and a high frequency band, the band reject filter (BRF) is used to increase the audio signal in the distortion form at the low and high frequency bands and output the audio signal. In this case, the controller 111 applies the control signal to the equalizer 102 to drive the band reject filter (BRF).

The audio signal filtered through the equalizer 102 is transmitted to the terminal 200. The distorted audio signal is maintained to the characteristic of an original audio signal through the terminal 200, and transmitted to the counterpart terminal 400.

Accordingly, an audio signal having a sound quality characteristic similar to the voice signal of the user is transmitted to the counterpart terminal 400 of the counterpart, so that call quality can be always maintained at a constant level.

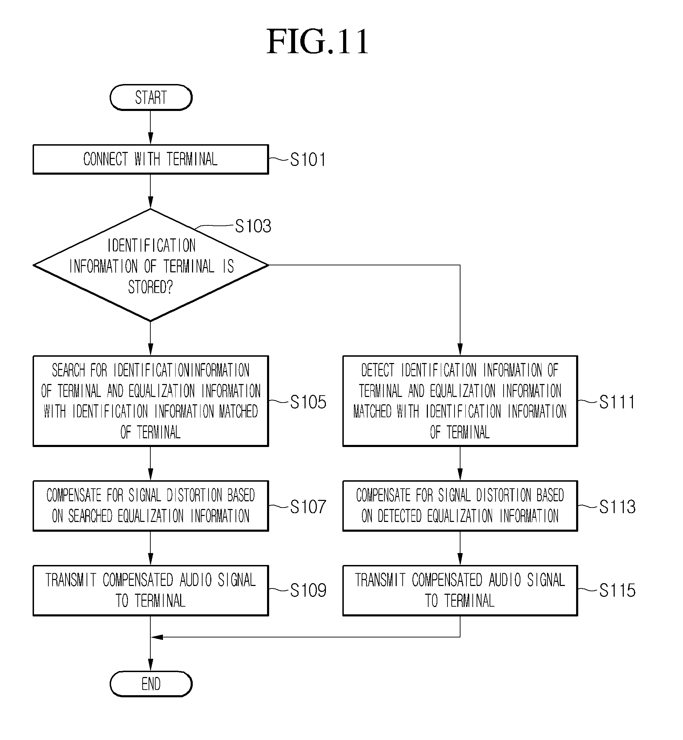

FIG. 11 is a flowchart showing a method for improving phone sound quality according to one embodiment of the disclosure.

The short range wireless communication apparatus 100 can be connected to the terminal 200 by transmitting a connection signal to the terminal 200 (step S101). Although the short range wireless communication apparatus 100 may include one of communication standards such as Zig-Bee and WiFi direct, the short range wireless communication apparatus 100 preferably includes Bluetooth.

The short range wireless communication apparatus 100 includes the microphone 101, the equalizer 102, the power amplifier 103, the A/D converter 104, the echo and noise attenuator 105, the wireless communication unit 106, the D/A converter 107, the audio amplifier 108, the speaker 109, the storage unit 110, and the controller 111, and the detailed description of the above components is the same as the description of the components of FIG. 4.

The controller 111 may determine if the identification information of the terminal 200 is stored in the storage unit 110 (step S103). The storage unit 110 may store programs required for the operation of the short range wireless communication apparatus. In particular, the storage unit 110 may store the identification information of at least one terminal and equalization information used to compensate for signal distortion by matching the identification information of the terminal with the equalization information. According to one embodiment, the equalization information may include information of a frequency response characteristic which is an output characteristic according to the frequency variation of the terminal 200. According to one embodiment, the equalization information may include the information of a compensation response characteristic used to compensate to the output characteristic according to the frequency variation of the terminal 200.

If the identification information of the terminal 200 is stored in the storage unit 110 according to the determination result, the controller 111 may search for the equalization information matched with the identification information of the terminal 200 in the storage unit 110 (step S105). The storage unit 110 may have the identification information of the terminal 200 and the equalization information matched with the identification information of the terminal 200 in the form of a look-up table.

Thereafter, the controller 111 transfers a control signal, which is used to compensate for the signal distortion based on the searched equalization information, to the equalizer 102, so that the equalizer 102 can compensate for the signal distortion (step S107). The signal distortion may refer to signal attenuation or signal amplification.

Next, the controller 111 generates a control signal, which is used to transmit the compensated audio signal to the terminal 200, and transfers the control signal to the wireless communication unit 106. Then, the wireless communication unit 106 can transmit the compensated audio signal to the terminal 200 (step S109).

Therefore, an audio signal having a sound quality characteristic similar to that of a voice signal of the user is transferred to the counterpart terminal 400 used by the counterpart, so that the call quality can be always maintained at a constant level.

If the identification information of the terminal 200 is not stored in the storage unit 110 according to the determination result, the controller 111 may detect the identification information of the terminal 200 and the equalization information matched with the identification information of the terminal 200 (step S111).

The controller 111 may store the detected identification information of the terminal 200 and the equalization information matched with the detected identification information of the terminal 200 in the storage unit 110.

If the terminal 200 is connected to the short range wireless communication apparatus 100 thereafter, the equalizer 102 can compensate for the signal distortion based on the detected equalization information (step S113), and the wireless communication unit 106 can transmit a compensated audio signal to the terminal 200 (step S115).

Through the above procedure, the short range wireless communication apparatus 100 can provide a phone voice having a constant level by utilizing the stored information even if the identification information of the terminal 200 connected to the short range wireless communication apparatus 100 and the equalization information are not stored in the storage unit 110.

The method for improving phone sound quality according to the disclosure may be prepared as a program executable by a computer and stored in computer-readable recording media. The computer-readable recording media include a ROM, a RAM, a CD-ROM, a magnetic table, a floppy disk, and an optical data storing device, and include a device realized in the form of a carrier wave (for example, transmission over the Internet).

The computer-readable recording media are distributed into computer systems connected to each other through a network to store computer-readable codes through a distribution scheme so that the computer-readable codes may be executed. In addition, function programs, codes, and code segments used to realize the method can be easily deduced by programmers in the art to which the disclosure pertains.

Although a preferred embodiment of the disclosure has been described for illustrative purposes, those skilled in the art will appreciate that various modifications, additions and substitutions are possible, without departing from the scope and spirit of the invention as disclosed in the accompanying claims.

## Claims

1. A short range wireless communication apparatus comprising:
a microphone to receive a phone voice to output an audio signal;
an equalizer to compensate the audio signal output from the microphone for signal distortion according to a frequency response characteristic of a terminal; and
a wireless communication unit to transmit the compensated audio signal to the terminal.

2. The short range wireless communication apparatus of claim 1, further comprising a storage unit to store identification information of at least one terminal and equalization information used to compensate for the signal distortion by matching the identification information of the at least one terminal with the equalization information.

3. The short range wireless communication apparatus of claim 2, further comprising a controller to search for identification information of a terminal connected to the short range wireless communication apparatus and equalization information matched with the identification information of the terminal in the storage unit, and to control the equalizer so that the equalizer compensates the audio signal according to the equalization information.

4. The short range wireless communication apparatus of claim 3, wherein the controller detects the identification information of the terminal connected to the short range wireless communication apparatus and the equalization information matched with the identification information, and performs a control operation to store the identification information of the terminal and the equalization information matched with the identification information in the storage unit if the identification information of the terminal is not stored in the storage unit.

5. The short range wireless communication apparatus of claim 2, wherein the equalization information includes information of a frequency response characteristic which is an output characteristic according to frequency variation of the terminal, or wherein the equalization information includes information of a compensation response characteristic used to compensate an output characteristic according to frequency variation of the terminal.

6. The short range wireless communication apparatus of claim 1, further comprising:
a power amplifier to amplify the compensated audio signal;
an analog-digital converter to convert the amplified audio signal to a digital signal; and
an echo and noise attenuator to attenuate echo and noise signals from the digital signal.

7. The short range wireless communication apparatus of claim 3, wherein the controller controls the equalizer according to the searched equalization information so that an intensity of the audio signal is compensated at a specific frequency band, if a frequency response characteristic of the terminal attenuates the intensity of the audio signal at the specific frequency band, or if a frequency response characteristic of the terminal amplifies the intensity of the audio signal at the specific frequency band.

8. The short range wireless communication apparatus of claim 1, wherein the short range wireless communication apparatus uses one of Bluetooth, WiFi direct, and Zig-Bee communication standards.

9. A method for improving phone sound quality of a short range communication apparatus, the method comprising the steps of:
connecting with a terminal;
determining if identification information of the terminal is stored in a storage unit;
searching for equalization information matched with the identification information of the terminal in the storage unit if the identification information of the terminal is stored in the storage unit according to a determination result; and
compensating for signal distortion based on the searched equalization information,
wherein the storage unit stores identification information of at least one terminal and equalization information, which is used to compensate for signal distortion based on a frequency response characteristic of the at least one terminal, by matching the identification information of the at least one terminal with the equalization information.

10. The method of claim 9, wherein, the compensating for the signal distortion based on the searched equalization information comprises compensating an intensity of an audio signal at a specific frequency band by attenuating the intensity of the audio signal at the specific frequency band if a frequency response characteristic of the terminal amplifies the intensity of the audio signal at the specific frequency band.

11. The method of claim 9, further comprising
detecting the identification information of the terminal and the equalization information matched with the identification information; and
storing the identification information of the terminal and the equalization information matched with the identification information in the storage unit, if the identification information of the terminal is not stored in the storage unit according to the determination result.

12. The method of claim 9, further comprising transmitting the compensated audio signal to the terminal.

13. The method of claim 9, wherein the equalization information includes information of a frequency response characteristic which is an output characteristic according to frequency variation of the terminal, or wherein the equalization information includes information of a compensation response characteristic used to compensate an output characteristic according to frequency variation of the terminal.

14. The method of claim 10, wherein the short range communication apparatus uses one of Bluetooth, WiFi direct, and Zig-Bee communication standards.

15. A computer-readable non-transitory recording medium realized with a program to execute the method claimed according to one of claims 9 to 14.
